# EUROPÄISCHE PATENTSCHRIFT

(11) **EP 0 446 963 B1**
(45) Veröffentlichungstag und Bekanntmachung des Hinweises auf die Patenterteilung: **17.08.1994**
(21) Anmeldenummer: 91106388.1
(22) Anmeldetag: 18.10.1988
(51) Int. Cl.: B65H 45/30

(54) **Vorrichtung zum Auftragen eines Flüssigkeitsstreifens auf wenigstens eine laufende Materialbahn**
Apparatus for applying a strip of liquid on at least a running web
Dispositif pour déposer une bande de liquide sur au moins une bande de matériau en mouvement

(30) Priorität: 23.10.1987 DE 3735856; 26.11.1987 DE 3740045
(43) Veröffentlichungstag der Anmeldung: 18.09.1991
(62) Teilanmeldung aus: 88117289.4
(73) Patentinhaber: GRAFOTEC GMBH, D-86420 Diedorf (DE)
(72) Erfinder: McPherson,Malcolm, Upton, Poole-Dorset BH16 5RA (GB); Senft,Reinhold, W-8901 Diedorf (DE)
(74) Vertreter: Munk, Ludwig, Dipl.-Ing.

(56) Entgegenhaltungen:
- DE-A- 3 215 372
- FR-A- 1 022 842
- GB-A- 2 165 470
- US-A- 2 747 865

## Beschreibung

Die Erfindung betrifft eine Vorrichtung gemäß Oberbegriff des Anspruchs 1.

Bei Anordnungen dieser Art enthält der Auftragkopf Verschleißteile, wie die Düse, dieser eventuell zugeordnete Steuerventile und dergleichen, die von Zeit zu Zeit ausgetauscht werden müssen. Dies ist bei den bekannten Anordnungen, bei denen die zu den verschiedenen Verschleißteilen führenden Zuleitungen zur Bewerkstelligung einer Austauschmöglichkeit der Verschleißteile demontiert werden müssen, schwierig und zeitaufwändig und erfordert dementsprechend lange Maschinenstillstandszeiten, was sich ungünstig auf die erreichbare Wirtschaftlichkeit auswirkt.

Hiervon ausgehend ist es daher die Aufgabe der vorliegenden Erfindung, eine Vorrichtung eingangs erwähnter Art mit einfachen und kostengünstigen Mitteln so zu verbessern, daß eine hohe Wirtschaftlichkeit erreicht werden kann.

Diese Aufgabe wird mit den kennzeichnenden Maßnahmen des Anspruchs 1 gelöst.

Die erfindungsgemäßen Maßnahmen ermöglichen in vorteilhafter Weise ein Abziehen bzw. Aufstecken der die Verschleißteile in Form der Düse etc. enthaltenden Hälfte des Auftragkopfes und damit einen einfachen und schnellen Austausch der Verschleißteile durch Austausch der zugeordneten Hälfte des Auftragkopfes. Infolge der hiermit erreichten Vereinfachung des Austausches der Verschleißteile können diesbezügliche Wartungs- und Instandhaltungsarbeiten in vorteilhafter Weise ohne Abschaltung der Maschine durchgeführt werden. Die erfindungsgemäßen Maßnahmen ergeben somit eine hohe Wartungs- und Instandhaltungsfreundlichkeit, die zu einer ausgezeichneten Gesamtwirtschaftlichkeit beiträgt.

Den genannten Zielen weiter dienende, vorteilhafte Ausgestaltungen und zweckmäßige Fortbildungen der übergeordneten Maßnahmen sind in den Unteransprüchen angegeben und in der nachstehenden Beschreibung eines Ausführungsbeispiels der Erfindung näher erläutert.

In der nachstehend beschriebenen Zeichnung zeigen:
- Figur 1: eine Draufsicht auf eine einem Falzapparat vorgeordnete Leimauftragseinrichtung,
- Figur 2: ein Blockschaltbild einer Leim- und Falzhilfeflüssigkeits-Auftragseinrichtung und
- Figur 3: einen Schnitt durch einen Auftragkopf der Anordnungen gemäß Figuren 1 und 2.

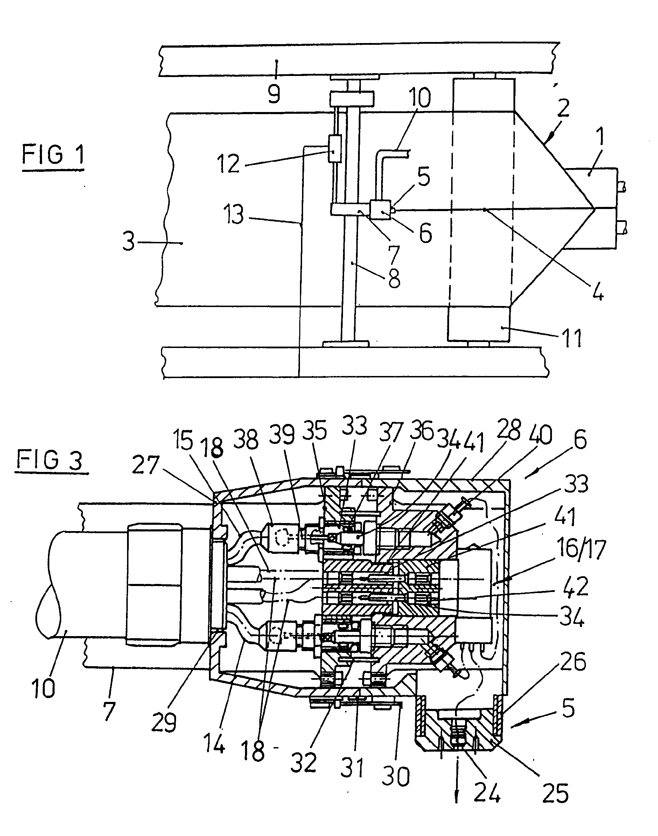

Die der Figur 1 zugrundeliegende Längsfalzeinrichtung besteht aus einem über zwei Falzwalzen 1 angeordneten Falztrichter 2, über den ein aus mehreren bedruckten Papierbahnen 3 bestehendes Bahnpaket gezogen wird. Die aufeinanderliegenden Papierbahnen werden miteinander verleimt, hier im Bereich der durch die Falzwalzen 1 und den Falztrichter 2 erzeugbaren Falzlinie. Hierzu wird auf die unter der obersten Papierbahn liegenden Papierbahnen im Bereich jeder gewünschten Leimnaht jeweils ein Leimstrich 4 aufgetragen. Als Leim ist besonders gut geeignet ein niederviskoser, nicht ionogen emulgierter Polymerkleber auf Akrylatbasis. Hierbei handelt es sich um einen Dispersionsleim mit einem Alkohol- oder Wasseranteil von etwa 40% und einem Klebstoffanteil von etwa 60%. Ein derartiger Leim ist dünnflüssig, d. h., besitzt eine wasserähnliche Viskosität in der Größenordnung von 17sec bei Messung mit dem DIN 4mm-Becher. Die Viskosität von Wasser liegt bei etwa 10sec. Die Oberflächenspannung des Leims kann bei etwa 30mN/m² liegen.

Der Leimstrich wird mittels einer Düse 5 berührungslos erzeugt. Die Düse 5 ist auf einem Auftragkopf 6 aufgenommen, der mittels eines zugeordneten Halters 7 an einer Traverse 8 festgelegt ist, die an den Gestellseitenwänden 9 des Falzapparatüberbaus bzw. der Druckmaschine befestigt ist. Der Auftragkopf 6 wird über einen angesetzten Versorgungsstrang 10 mit dem auf die zugeordnete Papierbahn aufzutragenden Medium sowie den erforderlichen Steuersignalen versorgt. Die Düse 5 befindet sich im Bereich des Auflaufs der zugeordneten Papierbahn 3 auf die oberhalb des Falztrichters 2 angeordnete Umlenkwalze 11, die eine straffe Bahnführung gewährleistet. Da die Düse 5 jedoch berührungslos arbeitet, kommt es auf einen konstanten Abstand der Bahn 3 von der zugeordneten Düse 5 nicht an, so daß der Auftragkopf 6 auch von der Umlenkwalze 11 weiter entfernt sein könnte, als es beim dargestellten Ausführungsbeispiel der Fall ist.

Die Stellung des Auftragkopfes 6 ist durch entsprechendes Verschieben des Halters 7 entlang der Traverse 8 einstellbar. In einfachen Fällen kann diese Einstellung manuell erfolgen. Im dargestellten Ausführungsbeispiel gemäß Figur 1 ist hierzu eine fernbedienbare Stelleinrichtung 12 vorgesehen, die über eine zum Bedienungspult führende Signalleitung 13 ansteuerbar ist. Die Anzahl der auf einer Traverse 8 aufgenommenen Auftragköpfe 6 entspricht der Anzahl der auf die betreffende Bahn 3 aufzutragenden Leimstriche 4. Im dargestellten Ausführungsbeispiel wird, wie weiter oben schon erwähnt, ein mittiger Leimstrich 4 aufgetragen und ist dementsprechend ein mittig angeordneter Auftragkopf 6 vorgesehen.

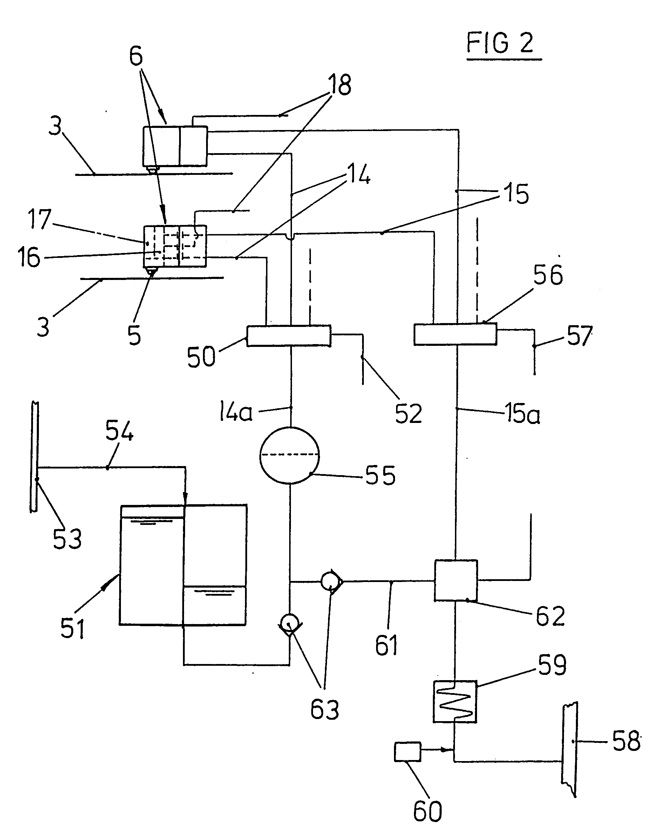

Auf die oberste Bahn eines Bahnpakets wird anstelle von Leim im Bereich der Falzlinie eine Falzhilfeflüssigkeit aufgetragen. Dasselbe gilt auch für die darunterliegenden Bahnen 3, sofern im Bereich der Falzlinie kein Leim aufgetragen werden soll. Da an einer Stelle jedoch nur entweder Leim oder Falzhilfeflüssigkeit benötigt werden, kann der Auftrag von Leim bzw. Falzhilfeflüssigkeit mit Hilfe ein- und desselben Auftragkopfes 6 erfolgen, der je nach Betriebsart mit Leim bzw. Falzhilfeflüssigkeit beaufschlagt wird. Ein derartiger Auftragkopf ist daher, wie am besten aus den Figuren 2 und 3 erkennbar ist, an zwei parallele, im Versorgungsstrang 10 enthaltene Flüssigkeitszuleitungen 14 , 15 für Leim bzw. Falzhilfeflüssigkeit angeschlossen und mit einer eingebauten, der Düse 5 vorgeordneten Ventilanordnung mit hier zwei in Serie liegenden Steuerventilen 16, 17 versehen, mit Hilfe derer die gewünschte Zuleitung aktiviert und die andere passiviert werden kann. Die Steuerventile 16, 17 werden durch in den Auftragkopf einlaufende, ebenfalls im Versorgungsstrang 10 enthaltene Signalzuleitungen 18 angesteuert.

Das der Düse 5 unmittelbar vorgeordnete Steuerventil 17 kann dabei als Unterbrecherventil ausgebildet sein, mit Hilfe dessen Unterbrechungen des Flüssigkeitsstrichs 4 erzeugbar sind. Das andere Steuerventil 16 ist als Mehrwege-Ventil ausgebildete, das einen Ausgang und zwei Eingänge aufweist, von denen der eine an der Leimzuleitung 14 und der andere an der Falzhilfeflüssigkeitszuleitung 15 liegen. Diese Anordnung ermöglicht nicht nur eine wahlweise Beaufschlagung der Düse 5 mit Leim bzw. Falzhilfeflüssigkeit sondern ermöglicht auch nach Beendigung eines Leimauftrags eine Spülung der Düse 5 mit Falzhilfeflüssigkeit, für die vorzugsweise erwärmtes Leitungswasser Verwendung finden kann.

Die zu den einzelnen Auftragköpfen 6 führenden Leimzuleitungen 14 gehen, wie Figur 2 weiter erkennen läßt, von einem Verteilerorgan 50 ab, das über eine Leimsammelzuleitung 14a mit einem Leimvorratsbehälter 51 verbunden ist. Das Verteilerorgan 50 ist über eine Steuerleitung 52 so ansteuerbar, daß jeweils nur die gewünschten Auftragköpfe 6 mit Leim versorgt werden. Der Leim kann aus dem Leimvorratsbehälter 51 abgepumpt werden. Im dargestellten Ausführungsbeispiel wird der Leim durch Druckbeaufschlagung des Leimvorratsbehälters 51 aus diesem abgedrückt. Hierzu wird die Leimoberfläche mit einer Druckluftquelle, hier in Form des betriebsinternen Druckluftnetzes 53, entnommener Druckluft beaufschlagt, die mittels einer Druckleitung 54 zugeführt wird. Der Leimvorratsbehälter 51 ist im dargestellten Ausführungsbeispiel so ausgebildet, daß jeweils zwei Leimgebinde aufnehmbar sind, die abwechselnd entleert werden. Der Anschluß der Druckleitung 54 ist hierzu entsprechend um-schaltbar.

Infolge der Dünnflüssigkeit des Leims kann der Durchmesser der Düsenbohrung der Düse 5 im Bereich von lediglich 0,5 mm liegen. Bei einer derart kleinen Düsenöffnung reicht der überliche Netzdruck von etwa 1,5 bar vollständig aus, um den Leim zur Düse 5 zu transportieren und über die Düsenbohrung abzuspritzen. Der Leimdruck liegt hierbei im Niederdruckbereich, so daß eine schwache Dimensionierung der Leitungen und Behälter möglich ist.

Die Leimsammelzuleitung 14a führt über eine dem Leimvorratsbehälter 51 nachgeordnete Filtereinrichtung 55. Diese enthält ein Filter mit einer Maschenweite von etwa 125 u. Infolge der Dünnflüssigkeit des Leims ergibt sich im Bereich der Filtereinrichtung 55 auch bei kompakter Bauweise kein übermäßiger Druckabfall. Das Filter der Filtereinrichtung 55 kann aus rostfreiem Stahl bestehen. Das in der Größenordnung von 1 zu 4 liegende Weitenverhältnis von Filtermaschenweite zu Düsenbohrungsdurchmesser gewährleistet einen verstopfungsfreien Langzeitbetrieb.

Die Feuchthilfeflüssigkeitszuleitungen 15 gehen ebenfalls von einem Verteilerorgan 56 ab, das über eine Steuerleitung 57 ansteuerbar ist. Das Verteilerorgan 56 ist über eine Falzhilfeflüssigkeitssammelzuleitung 15a mit einer entsprechenden Flüssigkeitsquelle, hier in Form des Wasserleitungsnetzes 58 verbunden. Das als Falzhilfeflüssigkeit Verwendung findende Leitungswasser wird über die Raumtemperatur erwärmt. Hierzu ist in der Sammelzuleitung 15a ein Durchlauferhitzer 59 vorgesehen. In manchen Fällen werden dem Wasser noch zusätzliche Chemikalien beigemischt. Hierzu ist dem Durchlauferhitzer 59 eine Beimischeinrichtung 60 vorgeordnet.

Die Falzhilfeflüssigkeit kann nicht nur zur Spülung der Düsen 5, sondern auch zur Spülung des gesamten Leimauftragsystems Verwendung finden. Hierzu sind die Leimsammelzuleitung 14a und die Falzhilfeflüssigkeitszuleitung 15a durch eine Bypass-Leitung 61 miteinander verbunden, die stromabwärts vom Durchlauferhitzer 59 von der Falzhilfeflüssigkeitssammelzuleitung 15a abzweigt und im Bereich des Ausgangs des Leimvorratsbehälters 51 in die Leimsammelzuleitung 14a einmündet. An der Abzweigung der Bypass-Leitung 61 von der Falzhilfeflüssigkeitssammelzuleitung 15a ist ein fernsteuerbares Mehrwegeventil 62 vorgesehen, das eine alternative Wasserführung über das Falzhilfeflüssigkeitssystem bzw.das Leimsystem ermöglicht. Zur Vermeidung eines unerwünschten Eindringens von Wasser in den Leimvorratsbehälter 51 bzw, von Leim in das Falzhilfeflüssigkeitssystem sind der Einmündung der Bypass-Leitung 61 in die Leimsammelzuleitung 14a beidseitig vorgeordnete Rückschlagventile 63 vorgesehen. Durch Spülung des gesamten Leimauftragssystems mit erwärmten Wasser lassen sich Verkrustungen etc., die sich im Laufe längerer Stillstandszeiten bilden könnten, verlässig vermeiden.

Im Falle kürzerer Stillstandszeiten genügt in der Regel zur Vermeidung von Betriebsstörungen bereits eine Spülung der Auftragköpfe 6. Hierzu wird bei passivierter Bypass-Leitung 61 die in jeden Auftragkopf 6 eingebaute Ventilanordnung so angesteuert, daß beim Abschalten des Bahnvorschubs im Bereich sämtlicher Auftragköpfe 6 die Leimzuleitung unterbrochen und die Falzhilfeflüssigkeitszuleitung geöffnet ist. Mit den genannten Spülungen der Auftragköpfe 6 bzw. des gesamten Leimauftragssystems kann begonnen werden, sobald die Bahngeschwindigkeit unter etwa ein Drittel der üblichen Bahngeschwindigkeit abgefallen ist, da bei Beendigung des Drucks ohnehin Makulatur entsteht. Die Steuerventile 16, 17 können hierzu mittels eines Rechners angesteuert werde, der Betriebsparameter aus der allgemeinen Maschinensteuerung und-Überwachung verarbeitet.

Die Düsen 5, die hier, wie Figur 3 am besten erkennen läßt, als rücklauflose Strahldüse mit einem die zentrale Düsenbohrung 24 mit einem Ausgangsdurchmesser von 0,5mm aufweisenden Düsenkörper 25 ausgebildet ist, der in einen Düsenstock 26 des Auftragkopfes 6 eingeschraubt ist, und die Steuerventile 16, 17 der jeder Düse 5 zugeordneten Ventilanordnung stellen Verschleißteile dar, deren Lebensdauer begrenzt ist und die von Zeit zu Zeit ersetzt werden müssen. Um dies zu erleichtern, besteht das Gehäuse jedes Auftragkopfes 6, wie Figur 3 weiter erkennen läßt, aus zwei schalenförmigen Hälften 27, 28 die durch Zusammenstecken lösbar aneinander festlegbar sind. Die eine Hälfte 27 ist dabei stationär angeordnet, d.h. auf dem Ha-lter 7 fixiert. Der Versorgungsstrang 10 führt zu der auf dem Halter 7 fixierten Hälfte 27 des Auftragkopfes 6, die mit einer entsprechenden Zugangsbohrung 20 versehen ist, in die das Ende der Umhüllung des Versorgungsstrangs 10 eingeschraubt sein kann. Die Verschleißteile in Form der Düse 5 bzw. der Ventilanordnung mit den Steuerventilen 16, 17 befinden sich auf der anderen Hälfte 29 des Auftragkopfes 6, die auf die stationäre Hälfte 27 aufsteckbar ist. Im Falle eines notwendig werdenden Austausches eines Verschleißteils wird daher einfach die Hälfte 28 abgezogen und durch eine neue ersetzt.

Die beiden Hälften 27, 28 des Auftragkopfes 6 können durch im Bereich einander gegenüberliegender Seiten angeordnete Spannschlösser 30 miteinander verspannt werden. Diese können als Kniehebel ausgebildet sein, die über ihren Totpunkt hinaus verschwenkt werden, so daß sich eine automatische Verriegelung ergibt. Im Bereich der Trennfuge kann eine der beiden Hälften mit einem umlaufenden Kragen 31 versehen sein, der eine hohe Staubdichtheit gewährleistet. Um sicherzustellen, daß die lose Hälfte 28 stets in der richtigen Stellung auf die stationäre Hälfte 27 aufgesteckt wird, können ein oder mehrere, asymmetrisch angeordnete, die Trennfuge überbrückende Paßstifte 32 vorgesehen sein.

Der in die stationäre Hälfte 27 einlaufende Versorgungsstrang 10 enthält sowohl die Flüssigkeitszuleitungen 14, 15 als auch die Signalzuleitungen 18. Sämtliche Leitungen gehen über die Trennfuge zwischen den beiden Hälften 27, 28 des Auftragkopfes 6 hinweg. Um dennoch eine leichte Abnehmbarkeit der losen Hälfte 28 zu ermöglichen, ist im Bereich der Trennfuge eine durch Steckkupplungen überbrückte Unterbrechung dieser Leitungen vorgesehen. Die den Flüssigkeitszuleitungen 14, 15 zugeordneten Steckkupplungen sind als Flüssigkeitkupplungen ausgebildet, die den Signalzuleitungen 18, zugeordneten Steckkupplungen sind als elektrische Kupplungen ausgebildet. In beiden Fällen bestehen diese Steckkupplungen im dargestellten Ausführungsbeispiel aus auf der einen Hälfte 27 befestigten Buchsen 33 und auf der anderen Hälfte 28 befestigten Steckstiften 34, die beim Aufstecken der losen Hälfte 28 auf die stationäre Hälfte 27 automatisch zum Eingriff in die jeweils zugeordnete Buchse 33 kommen. Die Buchsen 33 und die Steckstifte 34 verlaufen ebenso wie die Paßstifte 32 parallel zur Steckrichtung der aufsteckbaren Hälften 28, d.h. lotrecht zu Trennebene. Die Kupplungselemente in Form der Buchsen 33 bzw. Steckstifte 34 sind an trennfugenparallelen Tragplatten 35 bzw. 36 befestigt, die deckelartig in die jeweils zugeordnete, wannenförmige Hälfte 27 bzw. 28 des Auftragkopfes 6 eingesetzt sind. Im dargestellten Ausführungsbeispiel liegen die Tragplatten 35 bzw. 36 an in den Innenraum der jeweils zugehörigen Hälfte 27 bzw. 28 des Auftragkopfes 6 an und sind hiermit verschraubt.

Die Steckstifte 34 der Flüssigkeitskupplungen sind im dargestellten Ausführungsbeispiel als Hohlstifte ausgebildet, die mit Spiel in die jeweils zugeordnete Buchse 33 eingreifen. Der radiale Abstand wird dabei durch einen O-Ring 37 überbrückt. Den auf der stationären Hälfte 27 aufgenommenen Buchsen 33 der Flüssigkeitskupplungen ist jeweils ein Rückschlagventil 38 vorgeordnet, dessen Schließelement durch den in die betreffende Buchse 33 eingreifenden Steckstift 34 in Öffnungsstellung gehalten wird. Hierzu sind die Steckstifte 34 der Flüssigkeitskupplungen mit einem in der Eingriffsstellung in das vorgeordnete Rückschlagventil 38 eingreifenden Stößel 39 versehen. Um die Befestigung der Stößel 39 zu erleichtern, sind die betreffenden Hohlstifte mit einer radialen Eingangsbohrung versehen. Die Stößel 39 stellen sicher, daß beim Abziehen der losen Hälfte 28 die Flüssigkeitszuleitungen 14 bzw. 15 automatisch verschlossen werden, so daß keine Flüssigkeit verschüttet werden kann.

Die Buchsen 33 der Flüssigkeitskupplungen sind als in zugeordnete Durchgangsbohrungen der Tragplatte 35 eingeschraubte Nippel ausgebildet, an die das jeweils vorgeordnete Rückschlagventil 38 angesetzt ist. Die Steckstifte 34 der Flüssigkeitskupplungen sind ebenfalls mit Gewindenippeln versehen, die hier in eine jeweils zugeordnete Sackbohrung der Tragplatte 36 eingeschraubt sind. Von den genannten Sackbohrungen geht jeweils eine Stichbohrung ab, in die ein Anschlußnippel 40 eingeschraubt ist, der über einen vorderen Abschnitt der Flüssigkeitszuleitung 14 bzw. 15 mit dem Steuerventil 16 verbunden ist, wie in Figur 2 mit strichpunktierten Linien angedeutet ist.

Die Buchsen 33 der den Signalleitungen 18 zugeordneten elektrischen Kupplungen sind in einen aus Isolierwerkstoff bestehenden Träger 41 eingesetzt und mit den zugeordneten Signalleitungen verdrahtet, wie durch die Klemmen 42 angedeutet ist. Dasselbe gilt für die Steckstifte 34 der lektrischen Kupplungen. Die elektrischen Kupplungen sind zentral zwischen den Flüssigkeitskupplungen angeordnet, so daß die sämtlichen Signalleitungen 18 jeweils zugeordneten Buchsen 33 bzw. Steckstifte 34 auf jeweils einem gemeinsamen, isolierenden Träger 41 aufgenommen sein können. Die mit den Steckstiften der elektrischen Kupplungen verdrahteten Steuerventile 16 bzw. 17 können im Bereich zwischen den Anschlußnippeln 40 an der Rückseite der zugeordneten Tragplatte 36 befestigt sein.

## Patentansprüche

1. Vorrichtung zum Auftragen eines Flüssigkeitsstreifens auf wenigstens eine laufende Materialbahn, insbesondere zum Verbinden von mindestens zwei Materialbahnen mittels wenigstens eines auf wenigstens eine der Bahnen auftragbaren, durchgehenden oder unterbrochenen Leimstreifens (4), mit wenigstens einem auf einem Halter (7) aufgenommenen Auftragkopf (6), in den ein Versorgungsstrang (10) einläuft und der eine vorzugsweise als Spritzdüse ausgebildete Düse (5) aufweist, **dadurch gekennzeichnet,** **daß** der Auftragkopf (6) zwei lösbar aneinander festlegbare Hälften (27, 28) aufweist, von denen die eine Hälfte (27) am Halter (7) aufnehmbar und mit einer Einlaßöffnung (29) für den Versorgungsstrang (10) versehen ist, und die andere Hälfte (28) die Verschleißteile in Form der Düse (5) und der dieser zugeordneten Steuerventilanordnung (16, 17) enthält, und daß beide Hälften (27, 28) des Auftragkopfes (6) mit jeder in den Auftragkopf (6) einlaufenden Zuleitung (14, 15, 18) des Versorgungsstrangs (10) jeweils zugeordneten, im Bereich ihrer Trennfuge angeordneten Kupplungselementen (33 bzw. 34) versehen sind, die beim Aneinanderfestlegen der beiden Hälften (27, 28) automatisch in gegenseitigen Überbrückungseingriff kommen, wobei im Bereich jeder Flüssigkeitszuleitung (14, 15) stromaufwärts vom jeweils zugeordneten, stationären Kupplungselement eine Absperreinrichtung vorgesehen ist.

2. Vorrichtung nach Anspruch 1, **dadurch gekennzeichnet,** **daß** die Absperreinrichtung als Rückschlagventil (38) ausgebildet und mittels eines am zugehörigen, abziehbaren Kupplungselement vorgesehenen, vorzugsweise als Stößel (39) ausgebildeten Stellglieds in ihrer Öffnungsstellung haltbar ist und daß die beiden Hälften (27, 28) des Auftragkopfes (6) in ihrer Eingriffsstellung sicherbar, vorzugsweise verriegelbar sind.

3. Vorrichtung nach Anspruch 1 oder 2, **dadurch gekennzeichnet,** **daß** die lotrecht zur Trennebene der aneinander ansteckbaren, vorzugsweise mittels wenigstens eines Paßstifts (32) gegenseitig führbaren Hälften (27, 28) des Auftragkopfes (6) angeordneten Kupplungselemente in Form von Buchsen (33) und Steckstiften (34) ausgebildet sind, wobei im Bereich der jeweils einer Flüssigkeitszuleitung (14 bzw. 15) zugeordneten Kupplungselemente wenigstens eine vorzugsweise als O-Ring (37) ausgebildete Flüssigkeitsdichtung vorgesehen ist.

4. Vorrichtung nach einem der vorhergehenden Ansprüche, **dadurch gekennzeichnet, daß** die jeder Düse (5) zugeordnete, auf der abnehmbaren Hälfte (28) des zugehörigen Auftragkopfes (6) aufgenommene Ventilanordnung wenigstens ein stromaufwärts von der zugeordneten Düse (5) vorgesehenes Mehrwegeventil aufweist.

5. Vorrichtung nach einem der vorhergehenden Ansprüche, **dadurch gekennzeichnet, daß** die Ventilanordnung wenigstens zwei, unterschiedlichen Betriebsarten zugeordnete, hintereinander angeordnete Steuerventile (16, 17) aufweist.

6. Vorrichtung nach einem der vorhergehenden Ansprüche zum Auftragen von Leim und/oder Falzhilfeflüssigkeit auf eine mittels einer Druckmaschine bedruckte Papierbahn (3), **dadurch gekennzeichnet, daß** beim Abschalten der Druckmaschine vor Erreichen des Stillstands der Papierbahn die Leimzuleitung (14) absteuerbar und die Falzhilfeflüssigkeitszuleitung (15) aufsteuerbar sind.

7. Vorrichtung nach Anspruch 6, **dadurch gekennzeichnet,** **daß** zwischen der mit einer Filtereinrichtung (55) versehenen Leimzuleitung (14, 14a) und der vorzugsweise mit einem Durchlauferhitzer (59) versehenen Falzhilfeflüssigkeitszuleitung (15, 15a) eine stromaufwärts von der Filtereinrichtung (55) und vorzugsweise stromabwärts vom Durchlauferhitzer (59) angeordnete, wahlweise auf- und absteuerbare Bypass-Leitung (61) vorgesehen ist.

8. Vorrichtung nach einem der vorhergehenden Ansprüche, **dadurch gekennzeichnet, daß** die Düse (5) einen Bohrungsdurchmesser von 0,5mm aufweist.

9. Vorrichtung nach einem der vorhergehenden Ansprüche, **dadurch gekennzeichnet, daß** ein Weitenverhältnis der Maschenweite einer der Düse (5) vorgeordneten Filtereinrichtung (55) und der Düsenbohrung von 1:4 vorgesehen ist.

10. Vorrichtung nach einem der vorhergehenden Ansprüche, **dadurch gekennzeichnet, daß** eine Leimbereitstellungseinrichtung (51) vorgesehen ist, in welcher zwei handelsübliche Leimgebinde aufnehmbar sind, die wechselweise durch Niederdruckbeaufschlagung mit etwa 1,5 bar entleerbar sind.

## Claims

1. An apparatus for the application of a liquid strip on at least one moving web of material, more particularly for the connection of at least two webs of material by means of at least one continuous or interrupted strip (4) of adhesive able to be applied to at least one of the webs, comprising at least one application head (6) mounted on a holder (7), into which head a supply cord (10) extends and which possesses a nozzle (5) preferably in the form of a spray nozzle, characterized in that the application head (6) possesses two halves (27 and 28) able to be fixed together detachably, of which one can be mounted on the holder (7) and is provided with an inlet opening (29) for the supply cord (10) whereas the other half (28) comprises the wear-prone parts in the form of the nozzle (5) and the control valve arrangement (27 and 28), associated with the same, and in that both halves (27 and 28) of the application head (6) are provided with coupling elements (33 and, respectively, 34) associated with each supply line (14, 15 and 16) of the supply cord (10) extending into the application head (6) and arranged adjacent to their joint, which coupling elements automatically assume a mutual spanning engagement when the two halves (27 and 28) are fixed together, a shut off valve means being provided adjacent to each liquid supply line (14 and 15) downstream from the respectively associated, stationary coupling element.

2. The apparatus as claimed in claim 1, characterized in that the shut off valve means is designed in the form of a check valve (38) and can be held by means of a setting member provided on the associated pull-off coupling element and preferably designed in the form of a plunger (39) in its open position and in that the two halves (27 and 28) of the application head (6) can be secured in their engaged position and preferably can be locked therein.

3. The apparatus as claimed in claim 1 or 2, characterized in that the coupling elements, which are arranged perpendicularly to the joint plane, of the halves (27 and 28) which are guided by means of at least one locating pin (32) in relation to one another and plugged together, of the application head (6), are designed in the form of bushings (33) and pins (34), at least one fluid seal, preferably in the form of an O-ring seal (37) being provided adjacent to the coupling elements associated with one respective liquid supply line (14 and, respectively, 15).

4. The apparatus as claimed in any one of the preceding claims, characterized in that the valve arrangement associated with each nozzle (5) and mounted on the removable half (28) of the associated application head (6) possesses at least one multiway valve provided upstream from the associated nozzle (5).

5. The apparatus as claimed in any one of the preceding claims, characterized in that the valve arrangement possesses at least two control valves (16 and 17) provided for with different modes of operation and arranged in tandem.

6. The apparatus as claimed in any one of the preceding claims for the application of adhesive and/or folding adjuvant liquid on a paper web (3) printed by means of a printing press, characterized in that on switching off the printing press but prior to stopping the adhesive supply line (14) can be turned off and the folding adjuvant liquid line (15) can be turned on.

7. The apparatus as claimed in claim 6, characterized in that between the adhesive supply line (14 and 14a) provided with a filter device (55) and the folding adjuvant liquid line (15 and 15a), which is preferably provided with a continuous flow heater (59) a shunt line (61) is provided upstream from the filter device (55) and preferably downstream from the continuous flow heater (59) and can be selectively turned on and off.

8. The apparatus as claimed in any one of the preceding claims, characterized in that the nozzle (5) has an internal diameter of 0.5 mm.

9. The apparatus as claimed in any one of the preceding claims, characterized in that a width ratio between the mesh size of the filter device (55) arranged upstream from the nozzle (5) and the bore of the nozzle is provided with a value 1:4.

10. The apparatus as claimed in any one of the preceding claims, characterized by an adhesive preparing device (51), in which two commercially available adhesive drums can be accommodated, which can be discharged by the action of a low pressure of approximately 1.5 bar.

## Revendications

1. Dispositif pour appliquer un trait de liquide sur au moins une bande de matériau en défilement, en particulier pour relier au moins deux bandes de matériau au moyen d'au moins d'un trait de colle continu ou discontinu (4) qui peut être appliqué sur l'une au moins des bandes, comprenant au moins une tête applicatrice (6) qui est reçue sur un support (7), dans laquelle pénètre un canal d'alimentation (10) et qui comporte une buse (5) réalisée de préférence sous la forme d'une buse d'injection, caractérisé par le fait que la tête applicatrice (6) comporte deux moitiés (27, 28) qui peuvent être fixées l'une à l'autre d'une manière amovible, cependant que l'une (27) des moitiés peut être reçue sur le support (7) en étant pourvue d'un orifice d'entrée (29) destiné au canal d'alimentation (10), et que l'autre moitié (28) contient les pièces soumises à l'usure sous la forme de la buse (5) et du dispositif à valves de commande (16, 17) associé à celle-ci, et par le fait que les deux moitiés (27, 28) de la tête applicatrice (6) sont munies des éléments d'accouplement (33, respectivement 34) qui sont à chaque fois associés à chaque conduite d'amenée (14, 15, 18) du canal d'alimentation (10) pénétrant dans la tête applicatrice (6), qui sont disposés dans la région de leur plan de séparation et qui viennent automatiquement en prise et en recouvrement mutuels lorsque l'on fixe les deux moitiés (27, 28) l'une à l'autre, un dispositif de blocage étant prévu dans la région de chaque conduite d'amenée du liquide (14, 15) en amont de l'élément d'accouplement fixe qui est associé à chaque fois.

2. Dispositif selon la revendication 1, caractérisé par le fait que le dispositif de blocage est réalisé sous la forme d'une soupape anti-retour (38), et qu'il peut être maintenu dans sa position d'ouverture au moyen d'un organe de déplacement qui est prévu sur l'élément d'accouplement associé, celui-ci pouvant être retiré, et qui est réalisé de préférence sous la forme d'un poussoir (39), et par le fait que les deux moitiés (27, 28) de la tête applicatrice (6) peuvent être fixées, et de préférence verrouillées, dans leur position où elles sont en prise.

3. Dispositif selon la revendication 1 ou 2, caractérisé par le fait que les éléments d'accouplement disposés perpendiculairement au plan de séparation des moitiés (27, 28) de la tête applicatrice (6), lesquelles peuvent être enfichées l'une dans l'autre et de préférence guidées mutuellement au moyen d'au moins une tige d'ajustement (32), sont réalisés sous la forme de douilles (33) et de fiches à enfoncer (34), cependant qu'il est prévu au moins un organe d'étanchéité aux liquides, réalisé de préférence sous la forme d'un joint torique (37), dans la région des éléments d'accouplement qui sont à chaque fois associés à une conduite d'amenée du liquide (14, respectivement 15).

4. Dispositif selon l'une des revendications précédentes, caractérisé par le fait que le dispositif à valve qui est associé à chaque buse (5) et qui est reçu sur la moitié amovible (28) de la tête applicatrice associée (6) comporte au moins une valve à plusieurs voies qui est prévue en amont de la buse (5) associée.

5. Dispositif selon l'une des revendications précédentes, caractérisé par le fait que le dispositif à valve comporte au moins deux valves de commande (16, 17) qui sont disposées l'une derrière l'autre et qui sont affectées à des modes de fonctionnement différents.

6. Dispositif selon l'une des revendications précédentes, destiné à appliquer de la colle et/ou un liquide favorisant le pliage sur une bande de papier (3) imprimée au moyen d'une machine d'impression, caractérisé par le fait que, lorsque l'on arrête la machine d'impression, la conduite d'amenée de la colle (14) peut être commandée à la fermeture et la conduite d'amenée du liquide favorisant le pliage (15) peut être commandée à l'ouverture avant que l'arrêt de la bande de papier ne soit atteint.

7. Dispositif selon la revendication 6, caractérisé par le fait qu'entre la conduite d'amenée de la colle (14, 14a) qui est pourvue d'un dispositif de filtrage (55) et la conduite d'amenée du liquide favorisant le pliage (15, 15a) qui est de préférence pourvue d'un dispositif de chauffage (59) traversé par le liquide, une conduite de dérivation (61) qui peut être commandée au choix à l'ouverture ou à la fermeture est prévue en amont du dispositif de filtrage (55) et, de préférence, en amont du dispositif de chauffage (59) traversé par le liquide.

8. Dispositif selon l'une des revendications précédentes, caractérisé par le fait que la buse (5) présente un perçage d'un diamètre de 0,5 mm.

9. Dispositif selon l'une des revendications précédentes, caractérisé par le fait qu'il est prévu un rapport dimensionnel égal à 1/4 entre la largeur des mailles d'un dispositif de filtrage (55) qui est monté en amont de la buse (5) et le diamètre du perçage de la buse.

10. Dispositif selon l'une des revendications précédentes, caractérisé par le fait qu'il est prévu un dispositif de préparation de la colle (51) dans lequel peuvent être reçues deux compositions de colle du commerce qui peuvent être évacuées alternativement par action d'une dépression de 1,5 bar environ.
